# FASCICULE DE BREVET EUROPEEN

(11) **EP 2 381 824 B1**
(45) Date de publication et mention de la délivrance du brevet: **14.11.2012**
(21) Numéro de dépôt: 09799067.5
(22) Date de dépôt: 09.12.2009
(51) Int. Cl.: A47J 31/46, F16L 25/01

(54) **CONNECTEUR POUR MACHINE DE PREPARATION DE BOISSONS**
VERBINDER FÜR EINEN GETRÄNKEZUBEREITUNGSAUTOMAT
CONNECTOR FOR A DRINK-PREPARATION MACHINE

(30) Priorité: 12.12.2008 FR 0858512
(43) Date de publication de la demande: 02.11.2011
(73) Titulaire: Compagnie Méditerranéenne des Cafés, 06510 Carros (FR)
(72) Inventeur: BLANC, Jean-Pierre, F-06000 Nice (FR); GOERING, Alain, F-06000 Nice (FR)
(74) Mandataire: Hautier, Nicolas
(86) Numéro de dépôt international: PCT/EP2009/066672
(87) Numéro de publication internationale: WO 2010/066759

(56) Documents cités:
- EP-A- 0 793 044
- EP-A- 1 317 021
- EP-A- 1 537 810
- WO-A-2007/014891
- FR-A- 2 697 378
- FR-A- 2 734 583

## Description

La présente invention se rapporte à un connecteur pour module de machine de préparation de boisson. Elle concerne également un système de raccordement d'un module de machine de préparation de boisson à un organe hydraulique et à un organe électrique.

Une machine de préparation de boisson comporte habituellement un circuit d'eau chauffée ou non apte à réaliser une infusion ou une solubilisation d'une matière de préparation de boisson telle que la mouture de café, des feuilles de thé hachées ou encore du café en granulé soluble pour préparation instantané.

De manière connue une machine de préparation de boisson comporte plusieurs modules assurant chacun au moins une fonction particulière. Ainsi une machine comprend par exemple généralement une chaudière pour le chauffage d'un liquide et une pompe pour la mise sous pression du fluide. Selon la boisson à préparer la machine peut comprendre un nombre plus restreint ou plus grand de modules. Les contraintes de montage des modules et autres éléments de machine sont élevées notamment en terme de respect des conditions alimentaires et d'hygiène, de résistance à la pression, de résistance à la température et d'isolation électrique.

Il en résulte que les machines actuelles nécessitent un temps de montage relativement important et se prêtent difficilement à un démontage aisé. Il existe donc un besoin consistant à faciliter l'assemblage de la machine et à améliorer sa démontabilité. La présente invention s'inscrit dans ce cadre et propose un connecteur de module pour machine de préparation de boisson ainsi qu'un système de raccordement pour ce module. Le document FR-2734583 décrit un dispositif de raccordement permettant une connexion hydraulique et électrique.

A cet effet la présente invention prévoit un connecteur pour machine de préparation de boisson selon le revendication 1.

Ainsi, le connecteur permet de connecter hydrauliquement, électriquement et de manière réversible le module à un organe électrique et à un organe hydraulique. L'assemblage et le désassemblage du module sur la machine sont donc considérablement facilités. Ainsi ce connecteur s'inscrit particulièrement bien dans un contexte d'éco-conception. Notamment l'utilisateur peut lui-même désassembler le module et le renvoyer en vu de son entretien ou de son échange à un centre dédié de maintenance ou de recyclage. Il peut également remplacer ce module défectueux par un module en état de marche et remonter lui-même ce dernier sur la machine. Ainsi il n'est nul besoin d'expédier la machine dans son ensemble ce qui réduit la masse transportée donc l'émission de gaz effet de serre en conséquent.

En outre ce connecteur permet d'améliorer la modularité des machines de préparation de boisson. En effet un même connecteur peut convenir à plusieurs modules. Ainsi l'invention permet de rajouter, supprimer ou d'interchanger aisément divers modules de sorte à définir des machines de préparation de boissons aux performances variées. Par exemple un utilisateur ou un professionnel peut très facilement :
- ajouter à une machine un module additionnel pour améliorer les performances de cette dernière. Tel peut être le cas en ajoutant un module faisant office d'électrovanne de régulation du débit ou de la pression du fluide, un module permettant d'obtenir des fonctions supplémentaires telles qu'un générateur de vapeur optionnel.

Cet ajout s'effectue après démontage d'un bouchon obturateur spécifique préalablement installé et permettant d'assurer l'étanchéité initiale du circuit hydraulique ainsi que la protection des bornes de raccordement électriques.
- substituer un module existant défaillant par un module identique en état de marche,
- substituer un module existant par un module plus performant. Tel peut être le cas en substituant une chaudière de faible densité de puissance par une chaudière dont la densité de puissance est plus élevée ou un dispositif plus précis de comptage de volume pour obtenir la répétabilité caractéristique d'une machine automatique programmable

Ainsi les possibilités d'évolution et la simplicité de la maintenance sont considérablement améliorées. Par ailleurs l'invention permet de réduire le coût de conception et de fabrication d'une large gamme de machines puisque cette gamme peut être obtenue par combinaison de modules aisément intégrables au sein de la machine.

De manière facultative on prévoit en outre au moins l'une quelconque des caractéristiques suivantes :
- les moyens d'assemblage comportent un passage longitudinal apte à recevoir l'organe hydraulique.
- les moyens de fixation comprennent au moins une patte de clipsage présentant une surface d'appui destinée à coopérer avec une surface d'appui complémentaire portée par le module.
- les moyens de fixation sont disposés autour du passage longitudinal de réception de l'organe hydraulique.
- Les moyens de réception de l'organe électrique comportent au moins un logement agencé pour recevoir un plot de contact. Ce plot de contact présente une première extrémité destinée à entrer au contact du module. Par une deuxième de ses extrémités, le plot de contact est électriquement connecté à l'organe électrique, typiquement un câble électrique. Cette connexion peut être directe. Elle peut également faire intervenir une pièce intermédiaire de contact de type cosse FASTON. Le connecteur et le plot de contact sont agencés de sorte que la deuxième extrémité du plot est disposée hors du logement du connecteur. Cette deuxième extrémité ou la pièce intermédiaire de contact forme ainsi saillie au delà du connecteur. L'extrémité du câble connectée au connecteur n'est pas insérée dans le connecteur ce qui permet notamment de faciliter le montage et de simplifier la structure.
- le connecteur comprend des moyens de réception d'au moins un contacteur. Le connecteur est agencé de sorte que l'organe électrique soit fixé au contacteur. Avantageusement, l'organe électrique comprend un câble électrique dont l'extrémité est fixée au contacteur et qui est de préférence souple. De préférence, l'extrémité du câble électrique est fixée au contacteur par une liaison rapide et amovible. Par exemple, cette liaison peut être de type cosse FASTON. Ainsi, l'organe électrique comporte un simple câble électrique connecté de manière très aisée au connecteur. L'invention ne requiert donc que des éléments standard que l'on trouve aisément dans le commerce pour un coût très limité.

De préférence, le contacteur est un plot de contact. Il est monté coulissant dans le logement du connecteur à l'intérieur duquel il est logé.
- le connecteur est fixé à l'extrémité de l'organe hydraulique. De préférence, il est fixé à au moins un tuyau souple.

Le connecteur est donc fixé à l'extrémité d'au moins un câble électrique et à l'extrémité d'au moins un tuyau. La connexion des organes électriques et hydraulique au module ne requiert donc pas de raccord structurellement complexe. En particulier, l'invention permet de se passer d'un conduit de raccord à l'intérieur duquel s'étend une longueur significative du câble électrique et/ou du tuyau. Une fois le connecteur fixé au câble et au tuyau, il peut être aisément connecté au module. Le faible encombrement et la disposition du connecteur permettent à l'ensemble de conserver la souplesse des câbles et du tuyaux ce qui facilite les étapes de montage sans accroître la complexité de la structure.
- le connecteur comprend une portion de liaison reliant les moyens de réception de l'organe électrique aux moyens d'assemblage de l'organe hydraulique. Cette portion de liaison assure la solidarisation entre l'extrémité du tuyau et l'extrémité du ou des câbles électriques, ce qui permet leur maniement commun et leur connexion simultanée avec les portions correspondantes du module. Le montage est en simplifié. En outre, cette portion de liaison maintient une distance physique entre le câble électrique de l'organe électrique et le tuyau de l'organe hydraulique. Cette distance contribue à écarter la partie électrique de toute projection de fluide.
- le connecteur est agencé pour recevoir un organe électrique comprenant une pluralité de bornes électriques. De préférence, chaque borne électrique est un plot de contact. Les plots de contact ne sont pas répartis autour de la périphérie du tuyau de l'organe hydraulique. Ils sont séparés de ce dernier par une portion de liaison. Ainsi, les parties hydrauliques et électriques sont séparées l'une de l'autre.

- le connecteur comprend des moyens de détrompage aptes à coopérer avec des moyens complémentaires de détrompage portés par le module.
- le connecteur comprend une pluralité de moyens d'assemblage de sorte à permettre une connexion hydraulique entre une pluralité d'organes hydrauliques et au moins un module.

En outre on prévoit selon l'invention un système de raccordement entre un module de machine de préparation de boisson et un organe hydraulique selon la revendication 6.

De manière facultative le système de raccordement peut présenter au moins l'une quelconque des caractéristiques suivantes :
- le système comprend au moins un plot de contact logé au moins en partie dans le connecteur est présentant une première extrémité destinée à entrer au contact de l'élément complémentaire de connexion électrique porté par le module. L'organe électrique comprend un câble électrique. Le câble électrique est connectée électriquement à une deuxième extrémité du plot de contact. Cette connexion électrique peut être directe ou être indirecte et faire intervenir une pièce intermédiaire de contact. Avantageusement, elle est de type rapide et réversible. Elle est par exemple de type cosse FASTON. Le plot de contact et le connecteur sont agencés de sorte que le câble électrique soit disposé hors du connecteur. Le système est ainsi particulièrement peu encombrant, facile à assembler et simple de structure.
- la connexion électrique est établie par enfichage mutuel entre l'élément de connexion porté par l'organe électrique et l'élément complémentaire de connexion porté par le module.
- l'un parmi l'élément de connexion et l'élément complémentaire de connexion forme un plot de contact et dans lequel l'autre parmi l'élément de connexion et l'élément complémentaire de connexion définit une surface de contact électrique agencé pour recevoir le plot de contact.
- le système comprend un organe élastique agencé pour pousser et maintenir le plot de contact au contact de la surface de contact électrique lorsque le connecteur est solidarisé sur le module.
- le système comprend des moyens de détrompage agencés de sorte que la connexion électrique ne puisse s'établir que selon une configuration prédéterminée de fonctionnement.
- le système comprend des moyens de détrompage agencés de sorte que la connexion électrique ne soit possible que si la connexion hydraulique est établie et / ou soit agencés de sorte que la connexion hydraulique ne soit possible que si la connexion électrique est établie.

Le système permet d'améliorer la démontabilité de la machine et de répondre à des critères d'éco-conception comme expliqué précédemment. Par ailleurs il permet d'augmenter la modularité de la machine ce qui offre de grandes capacités d'évolution pour une même machine et réduit considérablement les coûts de conception et de fabrication des machines.

On prévoit encore selon l'invention un procédé de raccordement entre un module de machine de préparation de boisson et un organe hydraulique. Ce procédé est apte à être mis en oeuvre par le système de raccordement selon l'invention et comporte les étapes suivantes :
- assemblage de l'organe électrique avec le connecteur,
- insertion de l'organe hydraulique dans le connecteur par un mouvement de translation latéral relativement à un axe selon lequel s'étendent les moyens d'assemblage du connecteur,
- solidarisation du connecteur sur le module.

On peut en outre prévoir que la solidarisation du connecteur s'effectue par un mouvement relatif entre le connecteur et le module de translation longitudinale selon l'axe. L'insertion de l'organe hydraulique dans le connecteur peut alors être effectuée après ou avant la solidarisation du connecteur sur le module.

De manière alternative on prévoit que la solidarisation du connecteur s'effectue par un mouvement relatif entre le connecteur et le module de translation latérale selon une direction normale à l'axe. L'insertion de l'organe hydraulique dans le connecteur peut alors être effectuée simultanément avec la solidarisation du connecteur sur le module.

D'autres caractéristiques, buts et avantages de la présente invention apparaîtront à la lecture de la description détaillée qui va suivre, au regard des dessins annexés donnés à titre d'exemple non limitatifs et sur lesquels :
La figure 1 est une vue en perspective d'un exemple de connecteur selon l'invention.
La figure 2 est une autre vue en perspective du connecteur illustré en figure 1.
La figure 3 présente une vue en perspective d'un système de connexion selon l'invention comportant le connecteur illustré en figure 1.
La figure 4 est une vue en coupe et en perspective du système de la figure 3.
La figure 5 est une autre vue en coupe et en perspective du système illustré en figure 3 et pour lequel un cache a été retiré.
La figure 6 est une vue en perspective du module selon un exemple du système conforme à l'invention.
La figure 7 est une vue en perspective d'un bouchon d'obturation associé à un module selon l'exemple illustré en figures 3 à 6.
La figure 8 est une vue en perspective du bouchon illustré en figure 7.
La figure 9 est une autre vue en perspective du bouchon illustré en figure 7.

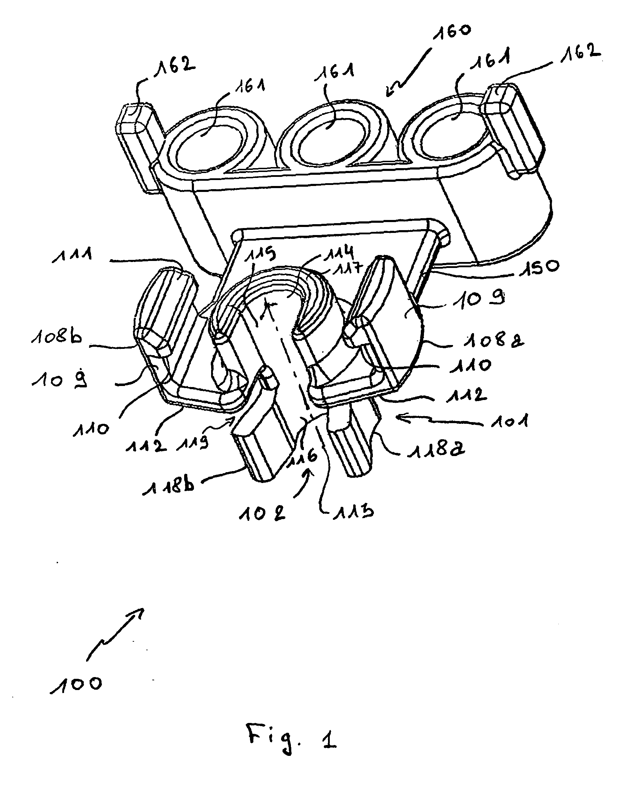

En référence aux figures 1 à 6 un connecteur et un système de raccordement pour module de préparation de boisson vont maintenant être détaillés.

De préférence les moyens de fixation sont conformés pour assurer une solidarisation du connecteur 100 sur le module 300 par clipsage. Un exemple précis de moyens de fixation par clipsage sera détaillé par la suite.

Le connecteur 100 comporte des moyens de fixation agencés pour coopérer avec un module 300 de préparation de boisson de sorte à assurer une solidarisation amovible du connecteur 100 sur le module 300. Typiquement, le module 300 peut être une chaudière, une pompe intégrée à un circuit hydraulique, une électrovanne de sécurité, une électrovanne de régulation du débit ou de la pression du fluide, un groupe formant une chambre d'infusion et comportant un vérin de fermeture de la chambre, un dispositif de comptage de volume, un capteur de pression, etc.

Le connecteur 100 comporte des moyens d'assemblage aptes à coopérer avec un organe hydraulique 400. Dans l'exemple illustré l'organe hydraulique 400 est un tuyau de préférence souple, il peut notamment être en matière plastique de type PTFE ou polyamide. L'invention n'est cependant pas limitée aux seuls organes hydrauliques 400 formés par un tuyau. Le connecteur 100 peut être lié via un tuyau directement à une source d'approvisionnement en eau, à un autre élément de la machine, à un autre module de la machine ou encore à une sortie de la machine telle qu'une buse de distribution de boisson.

Les moyens d'assemblage sont agencés de sorte que la solidarisation du connecteur 100 sur le module 300 entraîne la mise en communication hydraulique et le maintien de la communication hydraulique entre le module 300 et l'organe hydraulique 400.

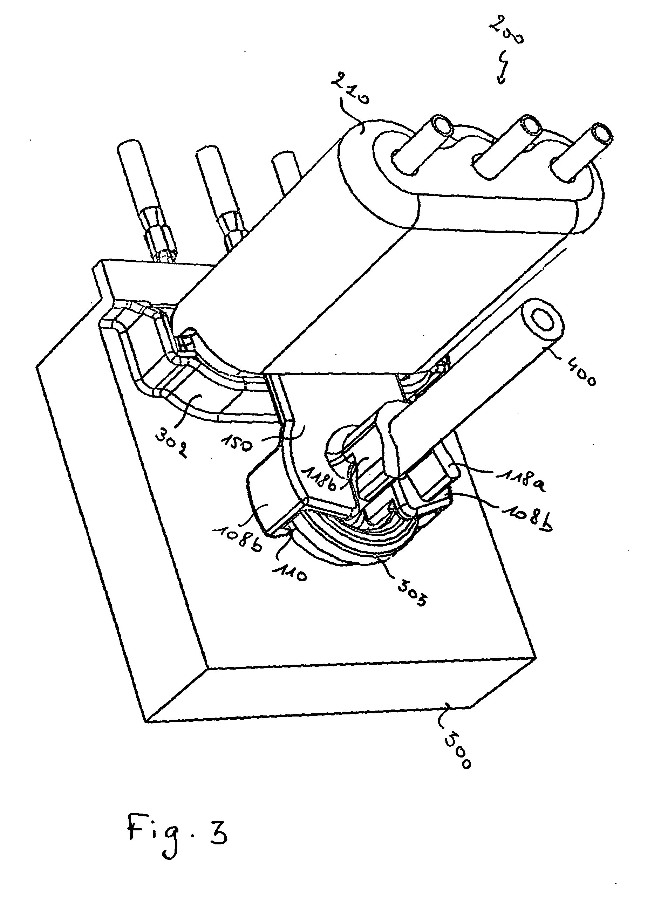

Le connecteur 100 comporte également des moyens de réception 160 d'un organe électrique 200. L'organe électrique 200 peut par exemple être un câble 205 électrique, électriquement connecté à une source d'alimentation électrique, à un autre module 300, à une sonde, à un voyant, à un circuit imprimé, à un microprocesseur ou microcontrôleur, etc. Il peut comporter une fiche rendue solidaire du connecteur 100 et destinée à être enfichée avec une fiche complémentaire portée par le module 300. Il peut également comporter un organe électrique présentant une zone de contact contre lequel est destiné à venir un plot de contact porté par le module. Dans une autre variante, l'organe électrique 200 est électriquement connecté un plot de contact 201 destiné à venir au contact d'une surface de contact porté par le module 300. C'est cette dernière variante qui est illustrée sur les figures 3 à 6.

Selon cette variante le câble de l'organe électrique est connecté au plot de contact de sorte que le câble soit disposée hors du connecteur.

Le connecteur 100 est agencé de sorte que sa solidarisation amovible sur le module 300 entraîne la connexion électrique de ce dernier avec l'organe électrique 200. La connexion électrique de l'exemple non limitatif illustré sur les figures va maintenant être décrit plus en détail.

Les moyens de réception 160 comprennent un logement 161 à l'intérieur duquel est disposé un élément de connexion porté par l'organe électrique 200. De préférence, l'élément de connexion comprend un plot de contact 201. Ce plot 201 présente une tête 202 destinée à entrer au contact d'une surface de contact 301 portée par le module 300 afin d'établir la connexion électrique entre ce dernier et l'organe électrique 200. Avantageusement, le connecteur 100 est agencé de sorte que le plot de contact 201 demeure au contact de la surface de contact porté par le module 301 même lorsque le connecteur 100 est déplacé dans une direction sensiblement parallèle à la normale à ce contact. Ainsi on prévoit que le plot 201 soit soumis à un effort de plaquage le maintenant au contact de la surface de contact 301. Le plot 201 coulisse à l'intérieur des moyens de réception 160. A cet effet, le plot 201 comporte une tige 203 s'étendant à partir de la tête 202 et les moyens de réception 160 présentent une portion de guidage en translation formée par un alésage à l'intérieur duquel coulisse la tige 203. De préférence, le diamètre de l'alésage est inférieur à la section du logement 161 dans lequel évolue la tête 202. Un organe élastique tel qu'un ressort 204 de compression est intercalé dans le logement 161. Il prend appui d'une part contre la réduction de section formée par l'alésage et d'autre part contre la tête 202. L'organe élastique est agencé pour pousser la tête 202 du plot 201 hors du connecteur 100 et pour maintenir le plot 201 fermement au contact du module 300 lorsque le connecteur 100 est solidarisé sur le module 300. L'effort de plaquage généré par cet agencement particulier assure ainsi une connexion électrique stable entre le module 300 et l'organe électrique 200.

Il a été découvert que cet effort de plaquage permet de réduire significativement les risques d'apparition d'un arc électrique et d'une étincelle au voisinage de l'organe électrique 200 et du module 300. Or un arc électrique ou une étincelle peut être à l'origine d'incendie dont les conséquences sont dramatiques. Cet agencement particulier du connecteur 100, de l'organe électrique 200 et du module 300 présentent ainsi un avantage important en terme de sécurité. En effet, le demandeur a observé que sans la présence d'un effort de plaquage de l'élément de connexion sur le module 300, le contact électrique peut être supprimé même de manière momentané, quand bien même il aurait été effectué convenablement lors du montage. Tel peut être le cas dans les machines existantes lorsque le module 300, le connecteur 100, l'organe électrique 200 ou l'organe hydraulique 400 est soumis à des vibrations provenant par exemple du fonctionnement d'une pompe. Tel peut également être le cas lorsque le module 300, le connecteur 100, l'organe électrique 200, l'organe hydraulique 400, ou encore d'autres parties de la machine est soumis à des mouvements significatifs ou à des dilatations thermiques. La multiplication des coupures provoque des étincelles à répétition dont la conséquence est une forte élévation de la température des pièces métalliques en contact. Cette forte élévation de température peut provoquer l'inflammation des parties non métalliques avoisinantes. Avec cette connexion sécurisée le module 300 peut être alimenté avec des courants de puissance relativement forte. En effet les risques d'apparition d'arcs électriques ou d'étincelles sont d'autant plus élevés que le module 300 est alimenté par des courants d'intensité élevée. Par exemple, pour élever la température d'une boisson à environ 90 degrés en l'espace de quelques secondes, un module 300 assurant la fonctionnalité de chaudière doit être équipé d'un élément chauffant à forte densité de puissance. Ce type d'élément chauffant requiert généralement des courants dont l'intensité est typiquement comprise entre 1 à 10 Ampères et dont la puissance est typiquement comprise entre 1300 Watts et 3500 Watts.

L'invention est donc particulièrement bien adaptée pour des modules 300 équipés d'au moins un organe électrique 200 nécessitant de fortes puissances comme par exemple des éléments chauffants à forte densité de puissance.

En outre, le demandeur a constaté qu'une connexion non stable peut entraîner une rapide détérioration du module 300 et limiter la durée de vie de ce dernier. En effet, la répétition des étincelles provoque un « charbonnement » en surface des plots de contact. Cette altération locale augmente la résistance de contact au passage du courant et provoque une perte de puissance progressive rendant le module 300 rapidement et inexorablement inopérante. Ainsi, l'invention tend à augmenter la durée de vie des modules électriques pour machine de préparation de boisson.

Avantageusement, le système de raccordement selon l'invention comprend des moyens de butée pour limiter l'amplitude de la translation du plot 201 dans le connecteur 100 selon chacun des deux sens de coulissement. Le plot comprend un élément saillant destiné à venir au contact du connecteur 100 dans un premier sens correspondant à un déplacement du plot hors du connecteur 100. L'élément saillant est par exemple formé par un circlip 212 logé dans une gorge pratiquée dans le plot.

De manière avantageuse, l'organe électrique 200 comprend au moins un câble 205 électrique électriquement connecté au plot par un dispositif de type cosses FASTON. Ainsi, lors du montage, le câble 205 est associé à une cosse par exemple femelle. Cette dernière est introduite sur le plot de contact 201 qui présente une surface complémentaire de la cosse femelle 206. Dans une variante de réalisation, la cosse du câble 205 électrique coopère avec une cosse complémentaire rapportée sur le plot 201 par exemple par sertissage. Cette solution implique un coût et un temps de montage limités.

Dans tous ces modes de réalisation, le plot est réalisé de préférence en un matériau présentant une bonne conductivité électrique, tel que le laiton, l'étain, le cuivre, l'argent, le platine ou l'or et leurs alliages ou plaquages respectifs.

La configuration du plot, ainsi que son matériau sont adaptés à transmettre des courants de forte puissance. Avantageusement, il est obtenu par frappe à froid.

Dans un mode de réalisation alternatif, le câble électrique de l'organe électrique est connecté au plot par l'intermédiaire d'une pièce intermédiaire de connexion. Cette dernière est solidaire du câble électrique. Elle est agencée pour demeurer au contact du plot lorsque ce dernier coulisse par rapport au connecteur. A cet effet elle glisse sur le plot. De préférence le plot comporte un méplat destiné à faire office de zone de contact par glissement lors du coulissement. La pièce intermédiaire comprend une élasticité et une configuration adaptée pour exercer un effort de plaquage de l'organe de connexion contre le plot. Cet effort préserve la connexion électrique entre le circuit électrique de l'organe électrique et le plot même sous l'effet des vibrations, de chocs ou de dilatations thermiques. La pièce intermédiaire de connexion comporte une première portion destinée à être disposée au contact du plot, une deuxième portion destinée à être disposée au contact du circuit de l'organe électrique 200 ou au contact du câble 205 et un coude séparant les première et deuxième portions. Le coude assure au moins en partie l'élasticité de l'organe de connexion.

La pièce intermédiaire de connexion est également réalisée en un matériau présentant une bonne conductivité électrique et des caractéristiques mécaniques adéquates en élasticité tel que les alliages à base de cuivre et de nickel et/ou de silicium comme le cupronickel ou le cuprosilicium. Le matériau de base à caractéristique élastique adéquat peut également être revêtu d'un autre métal à forte conductivité électrique comme le cuivre, l'étain, l'argent, le platine ou l'or.

Avantageusement, l'organe électrique 200 comprend un cache 210 destiné à protéger ses pièces constitutives, le connecteur 100 et le module 300 notamment contre les chocs, la corrosion et les contacts électriques involontaires.

Ce cache 210 permet également de stabiliser la connexion du câble 205 électrique sur le plot 201 et la fixation de l'organe électrique 200 sur le connecteur 100. A cet effet on prévoit que le cache 210 forme une enveloppe pour le plot 201 et pour l'extrémité du câble 205. Il présente ainsi un orifice de passage pour ce dernier.

Par ailleurs, le cache 210 comporte un dispositif de fixation pour être solidarisé sur le connecteur 100. Avantageusement cette solidarisation s'effectue par clipsage. Le cache 210 présente un relief 164 complémentaire d'un creux 211 porté par le connecteur 100. L'insertion du cache 210 par le connecteur 100 provoque la coopération du relief 164 avec le creux 211 et par conséquent la solidarisation du cache 210 sur le connecteur 100. De préférence la solidarisation du cache 210 sur le connecteur 100 est amovible afin de faciliter la démontabilité du système.

De manière préférée, le système de raccordement est agencé de sorte que ni les éléments de connexion portés par l'organe électrique 200 ni les éléments complémentaires de connexion portés par le module 300 ne soient rendus accessible lorsque le connecteur 100 est solidarisé sur le module 300. Ainsi, le cache 210, le connecteur 100 et le module 300 présentent des forment complémentaires pour assurer une continuité de la protection des parties électriques

Avantageusement, l'organe électrique 200 comporte une pluralité de plots associés chacun à un câble 205. Ainsi, dans le cas d'un module 300 ayant une fonction de chaudière, l'organe électrique 200 peut présenter trois plots faisant respectivement office de phase, de neutre et de terre.

Comme dans l'exemple illustré, le connecteur 100 présente alors trois logements 161 chacun étant destinés à recevoir un organe électrique 200.

De manière particulièrement avantageuse, le module 300 est agencé de sorte que lors de sa connexion sur le circuit électrique de la machine, le plot de la borne de terre entre au contact de la surface de contact 301 qui lui est associée avant que les plots des bornes de phase et de neutre n'entrent au contact de leur surface de contact 301, 301, 301 respective.

Par ailleurs, le module 300 est agencé de sorte que lors de sa connexion sur le circuit électrique de la machine, les contacts entre les plots de neutre et de phase avec leur élément de connexion respectif soient supprimés avant que le contact entre le plot de terre et son élément de contact associé soient supprimés. Ainsi, lorsque du courant circule dans le module 300, la borne de terre est toujours connectée à la mise à la terre de la machine. Cette variante permet de sécuriser significativement le montage et le démontage du module 300. A cet effet, on pourra par exemple prévoir que le plot de terre fasse saillie au-delà des plots de neutre et de phase. Notamment, le plot de terre peut être plus long ou les moyens de butée peuvent être décalés dans le sens du plaquage par rapport aux moyens de butée des plots de neutre et de phase.

Le connecteur 100 comprend une portion de liaison 150 reliant les moyens de réception 160 de l'organe électrique 200 aux moyens d'assemblage de l'organe hydraulique 400.

Dans un mode de réalisation préféré, les moyens d'assemblage comportent un corps 101 muni d'une ouverture longitudinale 102 autorisant un montage par insertion latérale sur au moins l'un parmi l'organe hydraulique 400 ou le module 300. Cet agencement permet de faciliter considérablement les opérations de montage et de démontage et contribue à satisfaire les critères d'éco-conception. En effet, dans le cas ou l'organe hydraulique 400 est constitué par l'extrémité d'un tuyau, il suffit d'insérer le tuyau dans le connecteur 100 par l'intermédiaire de l'ouverture longitudinale 102 pour réaliser un ensemble prêt à être rapporté sur l'organe hydraulique 400. L'invention offre ainsi la possibilité de réaliser la mise en place du connecteur 100 après avoir fait coopérer une embouchure portée par l'organe hydraulique 400 et une embouchure portée par le module 300. Dans cette variante on met en place le tuyau dans l'embouchure 303 du module 300, puis tout en les maintenant en position, on rapporte le connecteur 100 pour stabiliser et verrouiller leur connexion hydraulique.

On comprend aisément que cette réalisation est nettement plus pratique que les systèmes actuels.

Les moyens d'assemblage portés par le connecteur 100 ainsi que leur coopération avec l'organe hydraulique 400 et avec le module 300 vont maintenant être détaillés en particulier en référence à la figure 1.

Dans le reste de la description, on entend par direction longitudinale la direction illustrée au repère 113 correspondant au sens de la longueur du corps 101 du connecteur 100 et correspondant également usuellement avec l'axe de l'embouchure 303 du module 300 et de l'embouchure de l'organe hydraulique 400 (ici sous forme de tuyau cylindrique creux).

Un mouvement latéral est défini relativement à la direction longitudinale par un mouvement ayant au moins une composante perpendiculaire à l'axe.

Par ailleurs, le terme embouchure s'entend ici de l'extrémité d'un module ou plus généralement de l'extrémité de tout organe hydraulique au niveau de laquelle s'effectue le raccordement avec un autre organe pour assurer la continuité de la circulation fluidique.

Le connecteur 100 présenté est constitué par un corps 101 avantageusement en matière plastique polymère ayant les caractéristiques mécaniques suffisantes de tenue comme le polyamide (Pa) renforcé par fibre de verre, le Polybutylène Téréphtalate (PBT) renforcé, le Polysulfone (PSU) renforcé, le Polypropylène (PP) renforcé, le Polyéthylène (PE) renforcé, réalisé de manière monobloc par exemple par injection. Le corps 101 définit un passage suivant l'axe longitudinal 113 dans lequel vient l'embouchure de l'organe hydraulique 400. Cette insertion s'effectue par l'intermédiaire d'une ouverture longitudinale 102 apparaissant en figure 1 de sorte à éviter systématiquement le recours à un enfilage du connecteur 100 autour de l'organe hydraulique 400.

Une possibilité avantageuse consiste à prévoir que le corps 101 est déformable élastiquement de sorte que la largeur de l'ouverture longitudinale 102 peut être augmentée suffisamment pour assurer l'insertion de l'organe hydraulique 400, puis pour que le corps 101 reprenne sa position de repos en appui sur l'organe hydraulique 400.

Dans le cas illustré, la largeur de l'ouverture longitudinale 102 parcourt un secteur angulaire suivant la section du corps 101 de l'ordre de 90°.

Cette dernière valeur n'est pas limitative mais avantageusement inférieure à 180° pour optimiser le maintien en position du connecteur 100. Pour assurer son maintien longitudinal sur l'organe hydraulique 400, le corps 101 comporte dans l'exemple représenté une portion d'appui 114 réalisant dans le cas de l'exemple un contact cylindre sur cylindre sur l'organe hydraulique 400.

La portion d'appui 114 est ici constituée en deux parties autour d'une base 112 du corps 101. L'une des parties, dénommée partie intérieure 115, est orientée en direction de l'embouchure du module 303. La partie intérieure 115 peut participer à la résistance de la liaison en produisant un contact intérieur avec l'embouchure 303 du module 300. L'autre partie, appelée partie extérieure 116, est située de l'autre côté de la base 112. La partie extérieure 116 est plus accessible à l'utilisateur et comporte avantageusement deux ailes 118a, 118b repérées situées dans le prolongement de la portion extérieure 116 pour faciliter la manipulation du connecteur 100. Dans le cas représenté, les ailes 118a, 118b vont en s'écartant lorsque l'on s'éloigne de l'axe longitudinal 113 ce qui favorise l'insertion latérale sur l'organe hydraulique 400 et la préhension par l'utilisateur de sorte à opérer un léger mouvement d'écartement de la portion d'appui 114 lors des étapes de montage et/ou de démontage.

Pour favoriser la déformation élastique du corps 101 durant ces étapes, la partie extérieure 116 comporte un rétrécissement 119 apparaissant au niveau de sa jonction avec la base 112. Cette partie de la portion d'appui 114 est par conséquent plus facilement déformable de sorte à amorcer les mouvements de démontage. Par ailleurs, une déformation élastique légèrement concentrée à ce niveau peut permettre de favoriser la désolidarisation des moyens d'assemblage du connecteur 100 avec le module 300 comme cela sera exposé ci-après plus en détail.

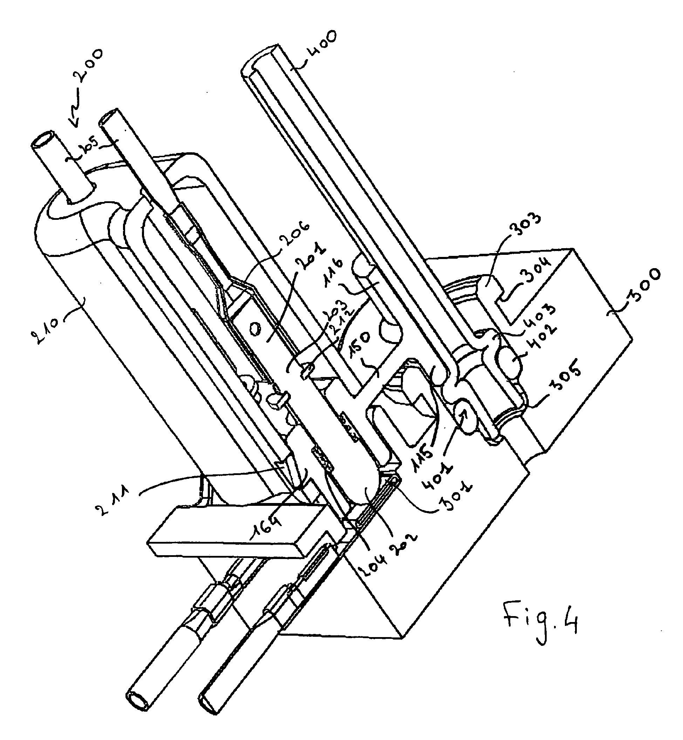

Le mode de réalisation de l'embouchure de l'organe hydraulique 400 présenté en figure 4 montre un bourrelet 403 ici formé par exemple dans la masse d'un élément de tuyau mais qui peut être rapporté sur celui-ci, le bourrelet 403 servant de moyen de connexion apte à coopérer avec les moyens d'assemblage du connecteur 100. Plus précisément, dans la configuration illustrée, la bordure 117 intérieure de la portion d'appui 114 s'appuie sur l'un des côtés du bourrelet comme représenté en figure 4.

Un mode de réalisation des moyens d'assemblage du connecteur 100 avec le module 300 est détaillé dans le passage qui suit.

Deux pattes déformables élastiquement sont raccordées à la base 112 de sorte à permettre un clipsage du corps 101 sur l'embouchure 303 du module 300. Une liaison par obstacle est formée par une surface d'appui 110 à l'extrémité des pattes et par une portion d'un rebord 304 formé au niveau de l'embouchure 303. Telles qu'illustrées de façon non limitative en figures 1, 3 et 4, deux pattes sont avantageusement formées de manière diamétralement opposée suivant l'axe longitudinal 113 du corps 101. L'insertion des pattes est facilitée par la déformation élastique d'une portion rétrécie des pattes repérée en figure 1 et par une portion d'introduction inclinée constituant une face inclinée 111 à l'extrémité distale de chacune des pattes.

La mise en place des pattes autour du rebord 304 s'effectue dans un mouvement longitudinal par déformation élastique des pattes d'abord pour les écarter puis pour les rapprocher lorsque le rebord 304 est dépassé.

On a représenté une solution avec deux pattes mais ce nombre n'est pas limitatif. La mise en position de verrouillage des pattes s'opère avantageusement par simple translation du connecteur 100 le long de l'organe hydraulique 400. Le déverrouillage peut être mis en oeuvre en écartant simultanément les pattes, par exemple grâce à un outil à la forme d'une fourchette. La déconnexion est ainsi aisée mais ne peut se produire de manière intempestive par exemple du fait de vibrations, ce qui garantit la sécurité du raccordement.

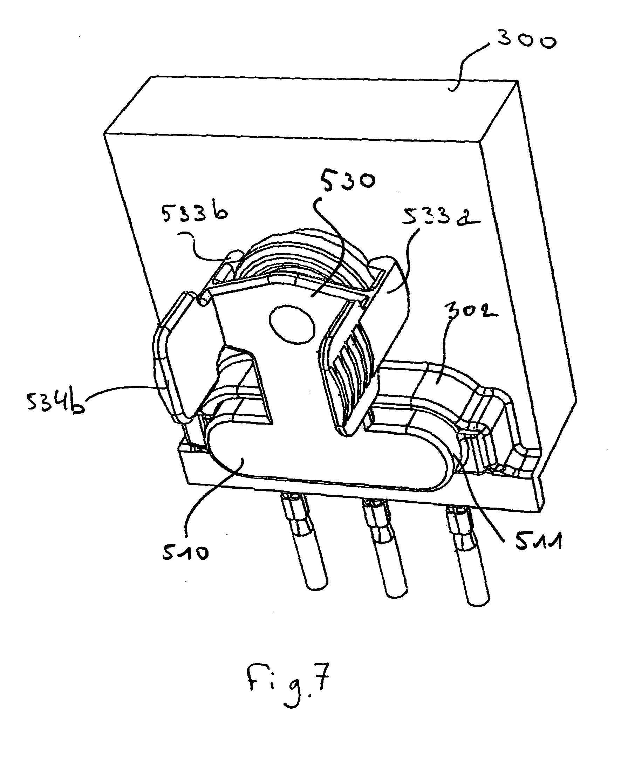

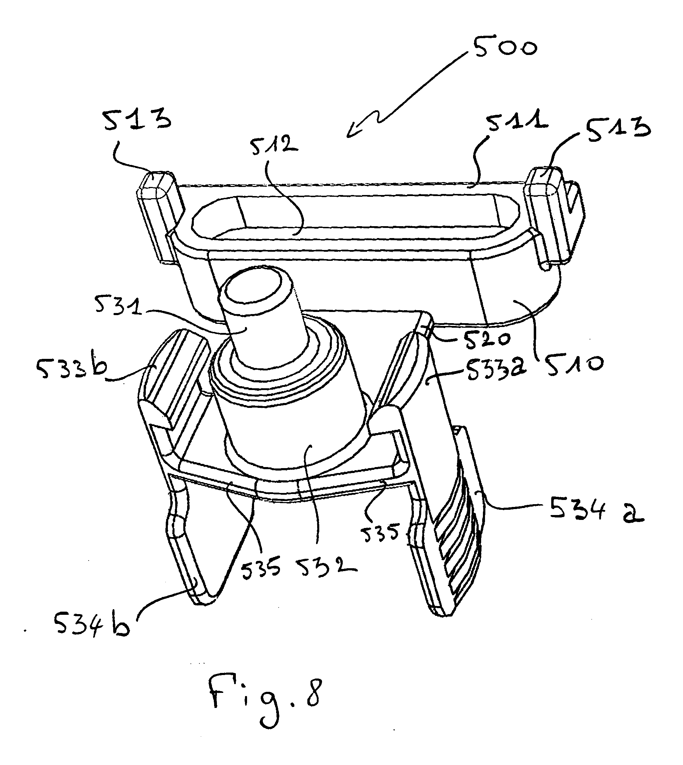

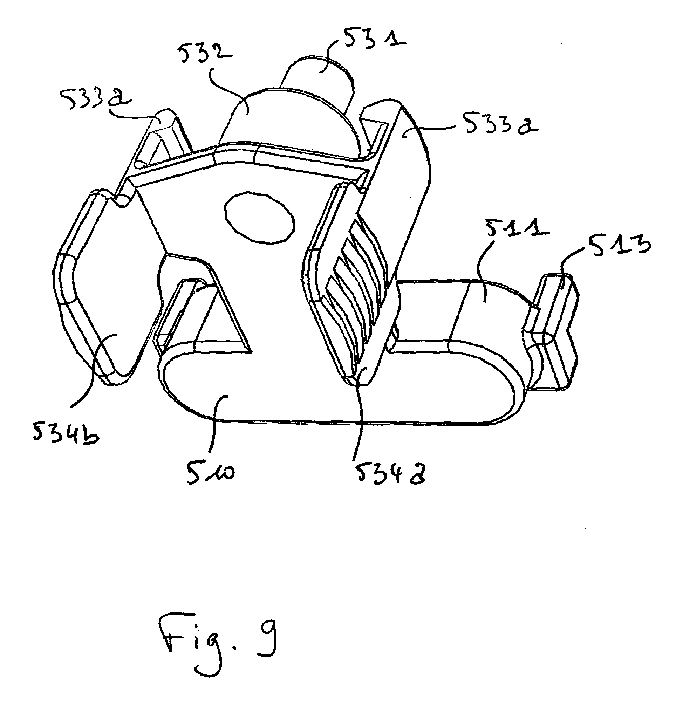

Une variante consiste à former, dans le corps 101 lui-même, des moyens de déformation élastique configurés pour écarter les pattes au démontage. Les moyens peuvent être définis par des prolongements situés dans la continuité de chaque patte du côté opposé aux dites pattes relativement à la base. Cela facilite l'extraction surtout lorsqu'il y a plus de deux pattes. En effet, l'opérateur exerce dans ce cas une action de flexion des prolongements lors de la préhension du corps du connecteur de sorte que l'écartement des pattes se produit simultanément. On peut par exemple prévoir trois prolongements espacés de 120°. Ces prolongements sont sensiblement identiques de par leur fonction et leur structure à ceux décrits par la suite et illustrés en figure 7 à 9 en rotation avec un bouchon d'obturation 500.

On notera que le système de raccordement ici proposé peut mettre en oeuvre une embouchure de l'organe hydraulique 400 sous forme d'extrémité de tuyau présentant un évasement au-delà du bourrelet. Cette configuration facilite la rétention d'un joint 402 mis en place par enfilement du côté du bourrelet opposé à son appui avec la bordure 117 de la portion d'appui 114.

On donne ci-après des exemples de montage du système de raccordement selon l'invention en particulier en référence aux figures 3, 4 et 5.

Selon l'exemple, dans un premier temps, le connecteur 100 est rapporté autour de l'organe hydraulique 400 par insertion au travers de l'ouverture longitudinale 102. Le bourrelet limite les mouvements de translation du connecteur 100 ainsi positionné.

Après cette phase ou auparavant un joint 402 d'un type classique (en particulier un joint 402 torique) est enfilé suivant une direction longitudinale à l'extrémité de l'embouchure de l'organe hydraulique 400. Il est facilement maintenu en position par appui sur le bourrelet 403 et de par l'effet de l'extrémité évasée de l'embouchure de l'organe hydraulique 400.

Dans une étape additionnelle, effectuée avant, après ou simultanément aux étapes précédentes, l'organe électrique 200 est solidarisé sur le connecteur 100.

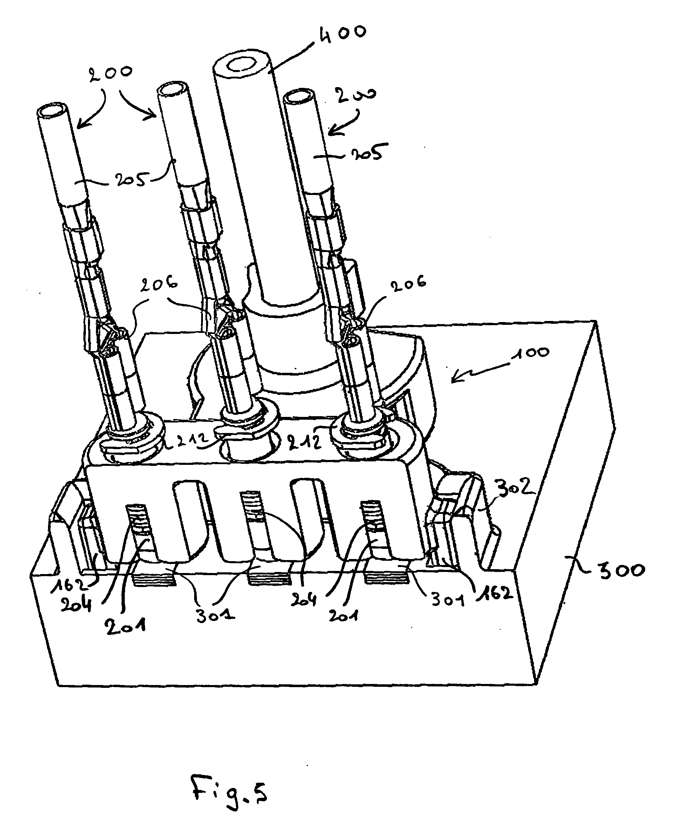

A cet effet, lorsque l'organe électrique est du type illustré sur les figures 4 et 5 on enfile le ressort 204 sur la tige 203 du plot 201 ou on dispose ce ressort 204 contre la réduction de section formée dans le logement 161 du connecteur 100, on insère le plot 201 de contact dans le logement 161, on dispose le circlip 212 sur le plot de sorte à ce que la course du plot 201 soit limitée en translation d'une part par la tête 201 et d'autre part par le circlip 212.

Après, ou avant ces étapes le plot 201 est connecté au câble 205. Le cache 210 est solidarisé sur le connecteur.

Le connecteur coopère ainsi avec l'organe hydraulique 400 au niveau de ses moyens d'assemblage et avec l'organe électrique 200 au niveau de ses moyens de réception 160.

Dans un deuxième temps l'embouchure de l'organe hydraulique 400 est introduite dans le canal interne de l'embouchure 303 du module 300. Ce mouvement est avantageusement limité par une surface de butée formée à l'intérieur du canal de l'embouchure 303 du module 300. Par ailleurs, le joint 402 vient en appui sur une portion du canal, avantageusement avant la mise en butée de l'embouchure de l'organe hydraulique 400 sur la surface de butée.

On solidarise ensuite le connecteur 100 sur le module 300. Cette solidarisation est de préférence obtenue par une translation longitudinale du connecteur 100 en direction de l'embouchure 303. Dans l'exemple illustré cette translation a pour effet de clipser les pattes 108a, 108b sur le rebord 304 du module 300.

La phase de montage du connecteur 100 sur l'organe hydraulique 400 et sur l'organe électrique 200 et la phase d'insertion de l'organe hydraulique 400 dans l'embouchure 303 du module 300 peuvent être inversées.

Ainsi on peut prévoir de :
- monter l'organe électrique 200 sur le connecteur 100
- insérer l'organe hydraulique 400 dans l'embouchure 303 du module 300,
- insérer l'organe hydraulique 400 dans le connecteur 100. Cette insertion s'effectue de préférence par un mouvement latéral du connecteur 100 relativement à l'organe hydraulique 400.

On solidarise ensuite le connecteur 100 sur le module 300 en faisant translater longitudinalement le connecteur 100 comme indiqué dans le mode précédent de montage. Ainsi, cette translation assure une solidarisation amovible par clipsage.

Les dimensions de ce système de raccordement sont avantageusement configurées pour que le joint 402 soit légèrement sollicité en compression lorsque la connexion globale est effective c'est à dire que le connecteur 100 est totalement assemblé avec l'organe hydraulique 400 et le module 300.

La présence d'un joint 402 aux propriétés élastiques assure éventuellement, outre l'étanchéité, une liberté de mouvement résiduelle en liaison rotule entre le module 300 et l'organe hydraulique 400. Cela préserve l'étanchéité malgré d'éventuelles sollicitations latérales extérieures (par exemple du fait de la pression, de la dilatation thermique ou des vibrations) sur l'organe hydraulique 400.

Une variante consiste à commencer le montage par l'enfilage du joint 402 sur l'organe hydraulique 400, d'insérer l'embouchure de l'organe hydraulique 400 dans le canal interne de l'embouchure 303 du module 300, puis à rapporter le connecteur 100 sur l'ensemble ainsi maintenu en position par un mouvement latéral unique. L'organe électrique 200 aura préalablement été rapporté sur le connecteur.

Dans cette variante, les faces au regard du module 300 et du connecteur 100 sont conformées pour ne pas empêcher la translation latérale de ce dernier. Cette variante permet de réduire le nombre d'étapes d'assemblage puisque avec une translation latérale unique, l'organe hydraulique 400 s'insère dans le connecteur 100 et le connecteur 100 est solidarisé sur le module 300. Pour assurer cette solidarisation par clipsage latéral, on peut prévoir que les pattes de clipsage présentent des surfaces appropriées à une venue en prise aisée avec l'embouchure par translation verticale. Cette variante est en particulier applicable dans le cas où la portion d'appui 114 ne comporte pas de partie intérieure 115 s'insérant dans le volume intérieur de l'embouchure 303 du module 300.

C'est le cas du mode de réalisation où la portion d'appui 114 s'étend vers l'extérieur uniquement avec une partie extérieure 116 saillante à partir de la base 112. Le bourrelet s'applique alors contre la face interne de la base 112.

Le démontage est également rendu possible par le connecteur 100 de l'invention. A cet effet, un procédé simple consiste à manipuler le corps 101 avec deux doigts chacun positionné respectivement sur l'une des ailes 118a, 118b de sorte à les écarter légèrement lors d'une déformation élastique. Cette déformation augmente la largeur de l'ouverture longitudinale 102 de sorte que le corps 101 peut s'échapper de son contact avec l'embouchure de l'organe hydraulique 400. Les pattes suivent le mouvement de déconnexion avec ou sans déformation élastique.

Dans le mode de réalisation décrit précédemment les moyens de fixation sont disposés au niveau des moyens d'assemblage de l'organe hydraulique 400. Ceci a pour avantage de concentrer les efforts de retenu dans une zone particulièrement sollicitée lors du montage, du démontage mais également lors du fonctionnement si l'organe hydraulique 400 est porté à une pression élevée.

De manière alternative ou additionnelle, on prévoit que les moyens de fixation sont disposés ailleurs qu'au niveau des moyens d'assemblage de l'organe hydraulique 400.

Avantageusement, le connecteur 100 comprend des moyens de détrompage agencés pour empêcher que l'organe électrique 200 soit connecté dans une configuration qui ne correspond pas à sa configuration de fonctionnement. On désigne par configuration de fonctionnement, une configuration dans laquelle chacun des plots portés par l'organe électrique 200 est au contact de l'élément complémentaire de connexion qui lui est associé et qui est porté par le module 300.

A cet effet, le connecteur 100 présente une forme complémentaire de celle du module 300 de manière à ce que le connecteur 100 s'emboîte sur le module 300 uniquement dans une position correspondant à la position de fonctionnement. On évite ainsi des branchements incorrects qui pourraient détériorer la machine ou conduire à des accidents domestiques. Par exemple on prévoit qu'une face du connecteur 100 présente un pourtour qui coïncide avec un motif 302 formé sur la face du module 300 destinée à recevoir le connecteur 100. On choisira un pourtour et un motif 302 ne présentant pas de symétrie en rotation selon un axe normal à l'une de ces faces.

Les moyens de détrompage sont également prévus de sorte que le positionnement correct de l'organe électrique 200 par rapport au module 300 implique un positionnement correct de l'organe hydraulique 400 par rapport à l'embouchure 303 du module 300.

De plus, le système du raccordement est configuré de sorte que l'établissement de la connexion électrique entre l'organe électrique 200 et le module 300 soit simultané avec l'établissement de la connexion hydraulique entre l'organe hydraulique 400 et le module 300. De la sorte, on réduit les risques que du liquide du circuit hydraulique ne s'échappe et ne parvienne aux pattes électriques.

De manière alternative et de préférence de manière cumulée, le système de raccordement est agencé de sorte que la connexion du circuit hydraulique implique obligatoirement que les organes électriques et le module 300 soient électriquement connectés. On prévoit à cet effet que le connecteur 100 et le module 300 soient conformés pour empêcher l'insertion du connecteur 100 dans l'embouchure du module 303 si le connecteur 100 n'est pas dans son positionnement de fonctionnement.

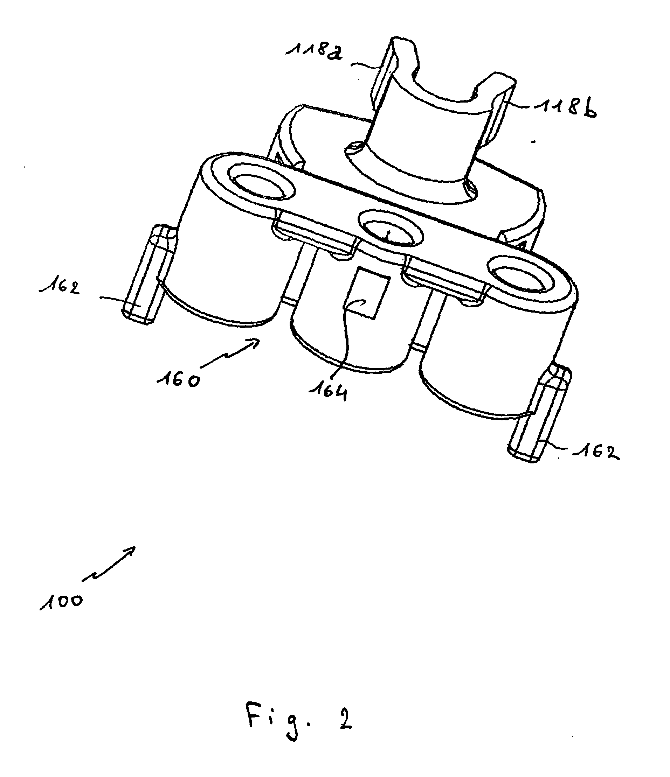

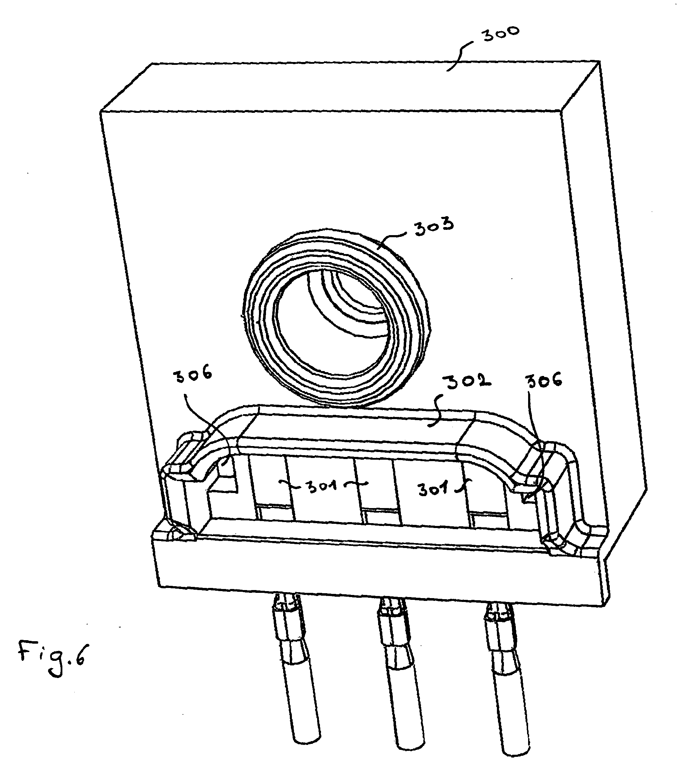

Avantageusement on choisit un motif 302 formant une butée pour l'insertion latérale du connecteur 100 sur l'embouchure 303 du module 300. On pourrait ainsi choisir de reporter soit sur la partie hydraulique, soit sur la partie électrique, soit de répartir sur ces deux parties les contraintes occasionnées par le choc entre le module 300 et le connecteur 100 lors de l'insertion de ce dernier sur l'embouchure 303 du module 300. Une répartition de ces contraintes sur la partie hydraulique et la partie électrique s'avère avantageuse pour automatiser le processus d'assemblage. Pour assurer cette fonction de détrompage on peut prévoir de manière alternative ou cumulée que le connecteur 100 comporte au moins une protubérance 162 destinée, en position de fonctionnement, à s'insérer dans un évidement 306 pratiqué dans le module 300. Cet évidement 306 est illustré en figure 6. La protubérance 162 fait également office d'indexage en rotation du connecteur 100 autour de l'embouchure 303 du module 300, permettant ainsi de positionner le connecteur 100. De préférence, et comme illustré en figures 1 et 2 le connecteur 100 présente deux protubérances 162. Les protubérances 162 présentent une section sensiblement carrée.

Si le connecteur 100 n'est pas disposé au droit de sa position de fonctionnement, la protubérance 162 interfère avec le module 300, empêchant ainsi tout emboîtement du connecteur 100 dans l'embouchure 303 du module 300.

Ainsi l'invention permet d'assurer la simultanéité de la connexion hydraulique et de la connexion électrique. Elle permet également de faciliter considérablement l'assemblage et le désassemblage du module sur une machine de préparation de boisson. Elle permet ainsi d'améliorer la modularité et la démontabilité des machines de préparation de boissons existantes.

De manière facultative, on prévoit un bouchon 500 d'obturation. Un exemple de bouchon 500 est illustré sur les figures 7 à 9. Ce bouchon 500 est agencé de sorte à coopérer avec le module 300 pour empêcher tout accès aux moyens de connexion électrique du module 300 et à l'embouchure 303 du module 300 depuis l'extérieur de ce module 300. Ainsi, lorsque le bouchon 500 est associé au module 300 les parties électriques et hydrauliques du module 300 sont protégées notamment des chocs, des contacts électriques involontaires et de la corrosion.

Le bouchon 500 est également agencé de sorte que sa coopération avec le module 300 entraîne une étanchéité de l'embouchure 303 du module 300. Il supprime ainsi tout risque de fuite du module 300.

Ainsi, ce bouchon 500 est particulièrement avantageux lorsqu'un module 300 doit être isolé électriquement et hydrauliquement de la machine. Tel peut être le cas lorsque le module 300 est retiré de la machine. Tel peut également être le cas lorsque l'on souhaite maintenir le module 300 sans le faire fonctionner dans une machine qui elle fonctionne.

Un tel bouchon 500 est également avantageux pour les modules pouvant de manière optionnelle être disposés en communication avec plusieurs organes électriques ou plusieurs organes hydrauliques. Par exemple on peut prévoir qu'une chaudière soit connectée en plus du circuit hydraulique conventionnel et de manière optionnelle avec un générateur de vapeur Tant que le générateur de vapeur est absent, le bouchon 500 est fixé sur la chaudière et empêche ainsi toute fuite par l'embouchure 303 de la chaudière qui est destinée à communiquer avec ce générateur de vapeur. Lorsque le générateur de vapeur est présent on le substitue au bouchon 500 pour établir sa communication avec la machine.
Un autre exemple consiste en l'ajout d'un dispositif plus précis de comptage de volume pour obtenir la répétabilité du volume d'une boisson à une autre et transformer une machine standard en une machine automatique programmable. De façon plus générale, ce bouchon permet une évolutivité d'un appareil dans le temps par adjonction de fonction supplémentaire installée dans un module complémentaire connectable.
Ainsi ce bouchon 500 contribue à accroître la modularité des machines de préparation de boisson. Par ailleurs, il facilite le montage et le démontage des machines et des modules puisque une seule opération suffie pour solidariser le bouchon 500, assurer une obturation hydraulique et une obturation électrique.

Le bouchon 500 présente vis-à-vis du module 300 sensiblement les mêmes caractéristiques fonctionnelles que le connecteur 100 décrit précédemment. Notamment, il est agencé de sorte que sa solidarisation sur le module 300 entraîne sa coopération avec l'embouchure 303 hydraulique et avec les moyens électriques de ce dernier.

En particulier, on peut prévoir que le bouchon 500 comporte une portion 510 complémentaire des moyens électriques du module 300. Cette portion complémentaire 510 définit une face d'obturation 512 disposée en utilisation de manière sensiblement parallèle et au droit de la face du module 300 portant les surfaces de contact 301. Cette portion complémentaire 510 présente une paroi formant relief 511 et s'étendant depuis ladite face d'obturation 512. Ce relief 511 est complémentaire du pourtour 302 du module 300. La coopération du relief 511 et du pourtour 302 empêche tout accès aux surfaces de contact 301 du module 300. De même que le connecteur 100, le bouchon 500 présente des protubérances 513 agencées pour s'insérer dans les évidements 306 pratiqués dans le module 300 et faisant office de moyens d'indexage.

Le bouchon 500 comporte en outre une portion 530 complémentaire des moyens hydrauliques du module 300 ainsi qu'une portion de liaison 520 assurant la liaison entre les portions complémentaires 510 et 530.

La portion complémentaire 530 comporte un corps 532 définissant une paroi d'obturation 531 de l'embouchure 303 hydraulique du module 300. Le corps 532 est configuré pour s'insérer au moins en partie dans l'embouchure 303 de sorte à établir une parfaite étanchéité avec cette dernière. De préférence, le corps 532 prend appui sur la paroi interne de l'embouchure 303.

Le bouchon 500 comporte des moyens de solidarisation amovible sensiblement identiques à ceux du connecteur 100. Ainsi, le bouchon 500 comprend au moins deux pattes de clipsage 533a, 533b destinées à coopérer avec le pourtour 304 l'embouchure du module 300. Avantageusement, chacune des pattes de clipsage 533a, 533b se prolonge par une aile de préhension 534a, 534b. Chaque ensemble formé par une patte 533a, 533b et une aile de préhension 534a, 534b est relié au corps 532 par une portion de fixation 535. Cette portion de fixation 535 est configurée pour faire office de levier pour la patte 533a, 533b. Ainsi quand l'utilisateur appuie sur une aile de préhension 534a, 534b, la patte 533a, 533b associée à cette aile se déplace. L'élasticité du bouchon 500 permet à la patte 533a, 533b de retrouver sa position de repos lorsque la sollicitation est supprimée de sorte à revenir en prise avec le rebord 304 de l'embouchure 303.

Avantageusement, le bouchon est formé d'une seule pièce constituée de matière plastique polymère ayant les caractéristiques mécaniques suffisantes de tenue comme le polyamide (Pa) renforcé par fibre de verre, le Polybutylène Téréphtalate (PBT) renforcé, le Polysulfone (PSU) renforcé, le Polypropylène (PP) renforcé, le Polyéthylène (PE) renforcé, réalisé de manière monobloc par exemple par injection.

Un tel bouchon peut être exploité indépendamment du connecteur décrit précédemment. Un tel bouchon et un module qui lui est associé forment un système d'obturation de module qui peut être exploité indépendamment du système de raccordement décrit précédemment.

L'invention n'est pas limité au mode de réalisation décrit ci-dessus mais s'étend à tous modes de réalisation conformes à l'objet des revendications. En particulier on peut prévoir de modifier le nombre d'organe hydraulique 400 et/ou le nombre d'organe électrique 200 associés à un même connecteur 100.

### REFERENCES

- 100.: Connecteur
- 101.: Corps
- 102.: Ouverture longitudinale
- 108a, 108b.: Patte de clipsage
- 109.: Zone déformable
- 110.: Surface d'appui
- 111.: Face inclinée
- 112.: Base
- 113.: Axe longitudinal
- 114.: Portion d'appui
- 115.: Partie intérieure
- 116.: Partie extérieure
- 117.: Bordure
- 118a, 118b.: Aile
- 119.: Rétrécissement
- 150.: Portion de liaison
- 160.: Moyens de réception
- 161.: Logement
- 162.: Protubérance
- 164.: Relief
- 200.: Organe électrique
- 201.: Plot de contact
- 202.: Tête
- 203.: Tige
- 204.: Ressort
- 205.: Câble
- 206.: Cosse femelle
- 210.: Cache
- 211.: Creux
- 212.: Circlip
- 300.: Module
- 301.: Surface de contact
- 302.: Motif
- 303.: Embouchure du module
- 304.: Rebord
- 305.: Surface de butée
- 306.: Evidement
- 400.: Organe hydraulique
- 401.: Embouchure de l'organe hydraulique
- 402.: Joint
- 403.: Bourrelet
- 500: Bouchon
- 510: Portion complémentaire des moyens électriques du module
- 511: Relief
- 512: Protubérance
- 513: Face d'obturation
- 520: Portion de liaison
- 530: Portion complémentaire des moyens hydrauliques du module
- 531: Paroi d'obturation de l'embouchure hydraulique du module
- 532: Corps du bouchon
- 533a, 533b: Pattes de clipsage
- 534a, 534b: Ailes de préhension
- 535: Portion de fixation

## Revendications

1. Connecteur (100) pour machine de préparation de boisson comprenant des moyens d'assemblage aptes à coopérer avec un organe hydraulique (400) et des moyens de fixation aptes à coopérer avec un module (300) de machine de préparation de boisson pour assurer une solidarisation amovible du connecteur (100) sur le module (300) de sorte à permettre une connexion hydraulique entre l'organe hydraulique (400) et le module (300), le connecteur (100) comprend en outre des moyens de réception d'un organe électrique (200, 400) agencés de sorte que la solidarisation amovible du connecteur (100) sur le module (300) permet une connexion électrique entre ce module (300) et l'organe électrique (200, 400), **caractérisé en ce que** le connecteur (100) est formé par une pièce unique et **en ce que** les moyens de fixation sont configurés pour assurer une fixation amovible par clipsage obtenue par une translation unique entre le connecteur (100) et le module (300).

2. Connecteur (100) selon la revendication précédente dans lequel les moyens d'assemblage comportent un corps 101 formant un passage longitudinal apte à recevoir l'organe hydraulique (400) et présentant une ouverture longitudinale (102) agencée de sorte à permettre l'insertion de l'organe hydraulique (400) par un mouvement de translation transversal à travers l'ouverture longitudinale (102).

3. Connecteur (100) selon la revendication précédente pris dans son rattachement avec la revendication 2 dans lequel les moyens de fixation sont disposés autour du passage longitudinal de réception de l'organe hydraulique (400).

4. Connecteur selon l'une quelconque des revendications précédentes dans lequel les moyens de réception de l'organe électrique (200, 400) comportent au moins un logement (161) agencé pour recevoir un plot de contact (201) électrique porté par l'organe électrique (200, 400) et pour recevoir un organe électrique (200, 400) comprenant une pluralité de bornes électriques.

5. Connecteur (100) selon la revendication précédente dans lequel la configuration et le matériau du plot sont adaptés à transmettre des courants de forte puissance, typiquement des courants dont l'intensité est comprise entre 1 à 10 Ampères et dont la puissance est comprise entre 1300 Watts et 3500 Watts.

6. Système de raccordement entre un module (300) de machine de préparation de boisson et un organe hydraulique (400), comportant respectivement un moyen de connexion hydraulique formé à l'embouchure du module (303) et un moyen de connexion hydraulique formé à l'embouchure de l'organe hydraulique (400) **caractérisé en ce qu'**il comprend un connecteur (100) selon l'une quelconque des revendications précédentes, dont les moyens d'assemblage coopèrent avec le moyen de connexion de l'organe hydraulique (400), dont les moyens de fixation coopèrent avec le module (300) pour assurer une solidarisation amovible entre le module (300) et le connecteur (100) de sorte à établir une connexion hydraulique entre l'organe hydraulique (400) et le module (300), le système comprenant en outre un élément de connexion électrique porté par un organe électrique (400) et un élément complémentaire de connexion électrique porté par le module (300), le système étant agencé de sorte à ce que la solidarisation du connecteur (100) sur le module assure une connexion électrique entre l'élément de connexion électrique et l'élément complémentaire de connexion électrique et de sorte que ladite solidarisation amovible soit obtenue par une unique translation entre le module (300) et le connecteur (100), la translation entraînant un clipsage entre le module (300) et le connecteur (100).

7. Système selon la revendication précédente dans lequel la connexion électrique est établie par enfichage mutuel entre l'élément de connexion porté par l'organe électrique et l'élément complémentaire de connexion porté par le module.

8. Système selon la revendication 6 dans lequel l'un parmi l'élément de connexion et l'élément complémentaire de connexion forme un plot de contact (201) et dans lequel l'autre parmi l'élément de connexion et l'élément complémentaire de connexion définit une surface de contact électrique agencé pour recevoir le plot de contact (201).

9. Système selon l'une quelconque des revendications précédentes comprenant des moyens de détrompage agencés de sorte que la connexion électrique ne puisse s'établir que selon une configuration prédéterminée de fonctionnement.

10. Système selon l'une quelconque des revendications précédentes comprenant des moyens de détrompage agencés de sorte que la connexion électrique ne soit possible que si la connexion hydraulique est établie et / ou soit agencés de sorte que la connexion hydraulique ne soit possible que si la connexion électrique est établie.

11. Système selon l'une quelconque des cinq revendications précédentes dans lequel le module (300) assure la fonctionnalité de chaudière et est équipé d'un élément chauffant à forte densité de puissance qui requière typiquement des courants dont l'intensité est comprise entre 1 à 10 Ampères et dont la puissance est comprise entre 1300 Watts et 3500 Watts.

12. Procédé de raccordement entre un module (300) de machine de préparation de boisson et un organe hydraulique (400), apte à être mis en oeuvre par le système de raccordement selon l'une quelconque des revendications 6 à 10 **caractérisé en ce qu'**il comporte les étapes suivantes :
- assemblage de l'organe électrique (200) avec le connecteur (100),
- insertion de l'organe hydraulique (400) dans le connecteur (100) par un mouvement de translation latéral relativement à un axe (113) selon lequel s'étendent les moyens d'assemblage du connecteur (100),
- solidarisation du connecteur (100) sur le module (300).

13. Procédé selon la revendication précédente, dans lequel la solidarisation du connecteur (100) s'effectue par un mouvement relatif entre le connecteur (100) et le module (300) de translation longitudinale selon l'axe (113).

14. Procédé selon la revendication 11, dans lequel la solidarisation du connecteur (100) s'effectue par un mouvement relatif entre le connecteur (100) et le module (300) de translation latérale selon une direction normale à l'axe (113).

15. Procédé selon l'une quelconque des revendications précédentes dans lequel l'insertion de l'organe hydraulique (400) dans le connecteur (100) est effectuée après la solidarisation du connecteur (100) sur le module (300) ou dans lequel l'insertion de l'organe hydraulique (400) dans le connecteur (100) est effectuée avant la solidarisation du connecteur (100) sur le module (300).

## Claims

1. A connector (100) for a beverage preparation machine comprising assembly means capable of coacting with a hydraulic device (400) and fixing means capable of coacting with a module (300) of a beverage preparation machine to ensure attachment of the removable connector (100) of the module (300) so as to enable a hydraulic connection to be made between the hydraulic device (400) and the module (300), the connector (100) further comprises means for receiving an electrical device (200, 400) arranged such that the detachable connection of the connector (100) on the module (300) provides electrical connection between the module (300) and the electrical device (200, 400), **characterized in that** the connector (100) is formed of a single part and **in that** the fixing means are configured to ensure releasable attachment by a clipping achieved by single translation between the single connector (100) and the module (300).

2. Connector (100) according to the preceding claim wherein the connecting means comprise a body (101) forming a longitudinal passage capable of receiving the hydraulic device (400) and with a longitudinal opening (102) arranged to allow the insertion of the hydraulic device (400) by a transveral translatory movement through the longitudinal opening (102).

3. Connector (100) according to the preceding claim considered in its association with claim 2 wherein the fixing means are arranged around the longitudinal passage receiving the hydraulic device (400).

4. A connector according to any preceding claim wherein the means for receiving the electrical device (200, 400) comprise at least one housing (161) arranged to receive an electrical contact stud (201) on said electrical device (200, 400) and to receive an electrical device (200, 400) comprising a series of electrical terminals.

5. A connector (100) according to the preceding claim wherein the configuration and material of the stud is adapted to transmit high-power currents, typically between 1 and 10 amperes and whose power is between 1300 Watts and 3500 Watts.

6. A connection system between a module (300) of a beverage preparation machine and a hydraulic device (400) comprising respectively a hydraulic connection means formed at the mouth of the module (303) and hydraulic connection means formed at the mouth of the hydraulic device (400) **characterized in that** it comprises a connector (100) according to any preceding claim, wherein the connecting means coact with the connection means of the hydraulic device (400), the fixing means of which coact with the module (300) to ensure the detachable connection between the module (300) and the connector (100) so as to establish a hydraulic connection between the hydraulic device (400) and module (300), the system further comprising an electrical connection component on an electrical device (400) and a complementary electrical connection on the module (300), the system being arranged such that the attachment of the connector (100) on the module provides an electrical connection between the electrical connection element and the complementary electrical connection element so that said detachable connection is achieved by a single translatory movement between the module (300) and the connector (100), resulting in the translatory movement causing clipping together of the module (300) and the connector (100).

7. A system according to the preceding claim wherein the electrical connection is established by mutual plugging in of the connection element on the electrical device and the complementary connection element on the module.

8. A system according to claim 6 wherein one of the connection elements and the complementary connection elements forms a contact stud (201) and wherein the other of the connection element or the complementary connection element defines an electrical contact surface arranged to receive the contact stud (201).

9. A system according to any preceding claim comprising locating means arranged so that the electrical connection can be established only in a predetermined configuration for operation.

10. A system according to any preceding claim comprising locating means arranged so that the electrical connection is only possible if the hydraulic connection is established and/or is arranged such that the hydraulic connection is only possible if the electrical connection is established.

11. A system according to any one of the five preceding claims wherein the module (300) ensures the functioning of the boiler and is equipped with a heating element with high-power density which typically requires currents between 1 to 10 Amp and powers between 1300 Watts and 3500 Watts.

12. Method of connection between a module (300) of a beverage preparation machine and a hydraulic device (400), capable of implementation by the connection system according to any one of claims 6 to 10 **characterized in that** it includes the following steps:
- assembly of the electrical device (200) with the connector (100),
- insertion of the hydraulic device (400) into the connector (100) by a lateral translational movement relative to an axis (113) alon which the connector assembly means (100) extend,
- joining the connector (100) on the module (300).

13. Method according to the preceding claim, wherein the connector (100) is secured by a relative movement between the connector (100) and the module (300) of longitudinal translation along the axis (113).

14. Method according to claim 11, wherein the securing of the connector (100) takes place by a relative lateral displacement movement between the connector (100) and the module (300) in a direction normal to the axis (113).

15. A method according to any of the preceding claims wherein the insertion of said hydraulic device (400) into the connector (100) takes place after the joining of the connector (100) of the module (300) or in which the insertion of the hydraulic device (400) into the connector (100) is performed before securing the connector (100) on the module (300).

## Patentansprüche

1. Verbinder (100) für eine Getränkezubereitungsmaschine, der Verbindungseinrichtungen besitzt, die mit einem Hydraulikorgan (400) zusammenwirken können, sowie Befestigungsmittel, die mit einem Modul (300) einer Getränkezubereitungsmaschine zusammenwirken können, um einen lösbaren Anschluss des Verbinders (100) an dem Modul (300) herzustellen und dadurch eine hydraulische Verbindung zwischen dem Hydraulikorgan (400) und dem Modul (300) zu ermöglichen ; weiterhin besitzt der Verbinder (100) zur Aufnahme eines elektrischen Organs (200, 400) derart angeordnete Mittel, dass der lösbare Anschluss des Verbinders (100) am Modul (300) den elektrischen Anschluss dieses Moduls (300) an das elektrische Organ (200, 400) erlaubt, **gekennzeichnet dadurch, dass** der Verbinder (100) aus einem einzigen Teil geformt ist und die Befestigungsmittel so gestaltet sind, dass eine lösbare Befestigung durch Clipsen mit einer einzigen Translationsbewegung zwischen dem Verbinder (100) und dem Modul (300) erreicht wird.

2. Verbinder (100) gemäß vorstehendem Patentanspruch, bei dem die Verbindungseinrichtungen einen Körper 101 besitzen, der einen Durchgang in Längsrichtung aufweist, um das Hydraulikorgan (400) aufzunehmen, sowie eine in Längsrichtung verlaufende Öffnung (102), die so gestaltet ist, dass das Einsetzen des Hydraulikorgans (400) mit einer Translationsbewegung quer über die sich in Längsrichtung erstreckende Öffnung (102) ermöglicht wird.

3. Verbinder (100) gemäß vorstehendem Patentanspruch, in Verbindung mit Patentanspruch 2, bei welchem die Befestigungsmittel um den in Längsrichtung verlaufenden Durchgang für die Aufnahme des Hydraulikorgans (400) herum angeordnet sind.

4. Verbinder gemäß einem der vorstehenden Patentansprüche, bei dem die Aufnahmemittel für das elektrische Organ (200, 400) mindestens eine Aufnahme (161) zum Einführen eines von dem elektrischen Organ (200, 400) getragen elektrischen Kontaktstücks (201) besitzen sowie zur Aufnahme eines elektrischen Organs (200, 400) mit mehreren elektrischen Kontaktklemmen.

5. Verbinder (100) gemäß vorstehendem Patentanspruch, bei dem die Gestaltung und der Werkstoff des Kontaktstücks zur Übertragung von Strömen hoher Leistung geeignet sind, typischerweise von Strömen mit einer Stromstärke von 1 bis 10 Ampere und einer Leistung von 1300 Watt bis 3500 Watt.

6. Verbindungssystem zwischen einem Getränkezubereitungsmaschinen-Modul (300) und einem Hydraulikorgan (400), die jeweils ein Mittel für den hydraulischen Anschluss besitzen, das einerseits an der Mündung des Moduls (303) und andererseits an der Mündung des Hydraulikorgans (400) ausgebildet ist, **gekennzeichnet dadurch, dass** es einen Verbinder (100) gemäß einem der vorstehenden Patentansprüche besitzt, dessen Verbindungseinrichtungen mit dem Anschlussmittel des Hydraulikorgans (400) zusammenwirken, dessen Befestigungsmittel mit dem Modul (300) zusammenwirken, um eine lösbare Verbindung zwischen dem Modul (300) und dem Verbinder (100) zu gewährleisten, so dass eine hydraulische Verbindung zwischen dem Hydraulikorgan (400) und dem Modul (300) hergestellt wird, wobei das System außerdem ein von einem elektrischen Organ (400) getragenes elektrisches Anschlusselement besitzt und ein komplementäres elektrisches Anschlusselement, das vom Modul (300) getragen wird, wobei das System derart gestaltet ist, dass die Befestigung des Verbinders (100) am Modul eine elektrische Verbindung zwischen dem elektrischen Anschlusselement und dem komplementären elektrischen Anschlusselement sicherstellt und zwar in der Weise, dass die genannte lösbare Verbindung durch eine einzige Translationsbewegung zwischen dem Modul (300) und dem Verbinder (100) bewirkt wird, wobei die Translationsbewegung zum Einrasten zwischen Modul (300) und Stecker (100) führt.

7. System gemäß vorstehendem Patentanspruch, bei dem die elektrische Verbindung durch Ineinanderstecken des vom elektrischen Organ getragenen Anschlusselements und des vom Modul getragenen, komplementären Anschlusselements hergestellt wird.

8. System gemäß Patentanspruch 6, bei dem entweder das Anschlusselement oder das komplementäre Anschlusselement ein Kontaktstück (201) besitzt und bei dem das jeweils andere Anschlusselement bzw. komplementäre Anschlusselement eine elektrische Kontaktfläche aufweist, die zur Aufnahme des Kontaktstücks (201) ausgebildet ist.

9. System gemäß einem der vorstehenden Patentansprüche, das Verwechslungssicherungselemente besitzt, die so angeordnet sind, dass der elektrische Anschluss nur in einer vorbestimmten Betriebskonfiguration hergestellt werden kann.

10. System gemäß einem der vorstehenden Patentansprüche mit Verwechslungssicherungselementen, die derart angeordnet sind, dass der elektrische Anschluss nur hergestellt werden kann, wenn der hydraulische Anschluss erfolgt ist und/oder derart angeordnet, dass der hydraulische Anschluss nur nach Herstellung des elektrischen Anschlusses möglich ist.

11. System gemäß einem der fünf vorstehenden Patentansprüche, bei dem das Modul (300) die Funktion eines Wasserkessels hat und mit einem Heizelement mit hoher Leistungsdichte ausgestattet ist, das typischerweise Ströme von 1 bis 10 Ampere Stromstärke und einer Leistung von 1300 Watt bis 3500 Watt erfordert.

12. Verfahren zur Verbindung eines Getränkezubereitungsmaschinen-Moduls (300) mit einem Hydraulikorgan (400), das von dem Verbindungssystem gemäß einem der Patentansprüche 6 bis 10 eingesetzt werden kann, **gekennzeichnet dadurch, dass** es folgende Schritte umfasst:
- Verbinden des elektrischen Organs (200) mit dem Verbinder (100),
- Einfügen des Hydraulikorgans (400) in den Verbinder (100) durch eine Translationsbewegung, die seitlich zu einer Achse (113) verläuft, in deren Richtung die Verbindungseinrichtungen des Verbinders (100) angeordnet sind,
- Befestigung des Verbinders (100) am Modul (300).

13. Verfahren gemäß vorstehendem Patentanspruch, bei dem die Befestigung des Verbinders (100) durch eine relative Translationsbewegung des Steckers (100) und des Moduls (300) in Richtung der Achse (113) erfolgt.

14. Verfahren gemäß Patentanspruch 11, bei dem die Befestigung des Verbinders (100) durch eine relative Translationsbewegung des Steckers (100) und des Moduls (300) in einer zur Achse (113) senkrecht liegenden Richtung erfolgt.

15. Verfahren gemäß einem der vorstehenden Patentansprüche, bei dem das Einführen des Hydraulikorgans (400) in den Verbinder (100) nach der Befestigung des Verbinders (100) im Modul (300) erfolgt, oder bei dem das Einführen des Hydraulikorgans (400) in den Verbinder (100) vor der Befestigung des Verbinders (100) am Modul (300) erfolgt.
